# EUROPÄISCHE PATENTSCHRIFT

(11) **EP 0 655 191 B1**
(45) Veröffentlichungstag und Bekanntmachung des Hinweises auf die Patenterteilung: **17.06.1998**
(21) Anmeldenummer: 94113430.6
(22) Anmeldetag: 27.08.1994
(51) Int. Cl.: A01G 9/14, F16B 5/06

(54) **Pflanzenpalette**
Plant pallet
Palette pour plantes

(30) Priorität: 26.11.1993 CH 3535/93
(43) Veröffentlichungstag der Anmeldung: 31.05.1995
(73) Patentinhaber: ROMAY AG, CH-5727 Oberkulm (CH)
(72) Erfinder: Worni, Guido, CH-5736 Burg (CH)
(74) Vertreter: Groner, Manfred, Dr.

(56) Entgegenhaltungen:
- EP-A- 0 521 292
- GB-A- 896 611
- US-A- 4 018 022

## Beschreibung

Die vorliegende Erfindung bezieht sich auf einen Bauteilsatz gemäss dem Oberbegriff des Anspruchs 1 und eine Pflanzenpalette gemäss dem Oberbegriff des Anspruchs 5.

In modernen Gewächshäusern werden Einzelpflanzen in Töpfen gezogen und die Töpfe mit der eingepflanzten Jungpflanze für die Dauer ihres Wachstums bis zur gewünschten Handelsgrösse auf Pflanzenpaletten gestellt (siehe z.B. EP-A-0 521 292). Der Boden der Pflanzenpalette ist mit längs- und querverlaufenden Bewässerungsrillen versehen. Während des Pflanzenwachstums liegen die mit Töpfen gefüllten Pflanzenpaletten auf einem Untergestell (auch Wannenhalterung genannt). Das geordnete Abstellen der Pflanzentöpfe und ihr dichtes Aufreihen auf den Pflanzenpaletten sowie der Transport der letzteren und ihr Auflegen auf das Untergestell erfolgt meist in einem automatisierten Vorgang. Diese mechanisierte und selbsttätige Handhabung der Pflanzenpalette bewirkt nebst hohen Ansprüchen an deren Masshaltigkeit auch solche an deren Dichtheit, damit keine Leckwasserverluste eintreten. Solche Wasserverluste haben vorallem bei einer rechnergesteuerten Pflanzenpflege schwerwiegende Nachteile auf die Produktivität einer Anlage.

Die Pflanzenpaletten werden regelmässig am Ort der Produktionsanlage zusammengebaut. Sie bestehen aus einem rechteckigen Aluminiumrahmen mit den Boden tragenden Querstreben, in den als Palettboden mehrere mit Bewässerungsrillen versehene Platten nacheinander eingeschoben sind, so dass die Bewässerungsrillen miteinander fluchten. Die an den Rahmen angrenzenden Plattenränder sind am Rahmen hochgezogen; die aneinander grenzenden Plattenränder dagegen überlappen sich und sind durch eine Leimnaht wasserdicht miteinander verklebt. Das Verbinden bzw. Verkleben der überlappenden Plattenränder ist zeitaufwendig und führt zu Unregelmässigkeiten, die oft ein Lecken der Palette zur Folge haben.

Die vorliegende Erfindung stellt sich daher die Aufgabe, eine rasch montierbare Pflanzenpalette zu schaffen, deren den Palettboden bildende Platten rasch und zuverlässig dicht verbindbar sind.

Erfindungsgemäss wird diese Aufgabe gelöst durch die kennzeichnenden Merkmale der Ansprüche 1 bzw. 5.

Anhand der beiliegenden schematischen Zeichnung wird die Erfindung beispielsweise erläutert. Es zeigen:
- Fig. 1: eine perspektivische Darstellung eines Untergestells und einer Pflanzenpalette,
- Fig. 2: einen Schnitt längs der Linie II-II in Fig. 1 und
- Fig. 3: einen vergrösserten Querschnitt durch die Dichtleiste.

Ein Untergestell besteht aus zwei im Querschnitt L-förmigen Längsträgern 2, die mit Querstreben 3 verbunden und auf Beine 4 aufgesetzt sind. Auf solche Untergestelle 1 sind während des Pflanzenwachstums die mit Pflanzentöpfen besetzten Pflanzenpaletten 5 abgestellt. Eine Pflanzenpalette 5 weist drei aneinander grenzende Platten 6, 7, 8 auf, die den Palettboden bilden. Sie sind in einen rechteckigen Aluminiumrahmen 9 mit U-Profil eingeschoben. Im Bereich der Nahtstellen der Platten 6, 7, 8 ist der Aluminiumrahmen 9 durch Querstreben 11 versteift, die auch die vergleichsweise dünnen Platten 6, 7, 8 aus tiefgezogenem Styropor oder dgl. Material unter Last an einer unerwünschten Durchbiegung hindern. Beim Zusammenbau der Pflanzenpalette 5 werden vor dem Anbringen der zweiten Stirnleiste 10 nacheinander die Platten 8, 7 bzw. 6 zwischen die Längsträger des Rahmens 9 geschoben und danach längs den einander zugwandten Seiten wasserdicht miteinander verbunden.

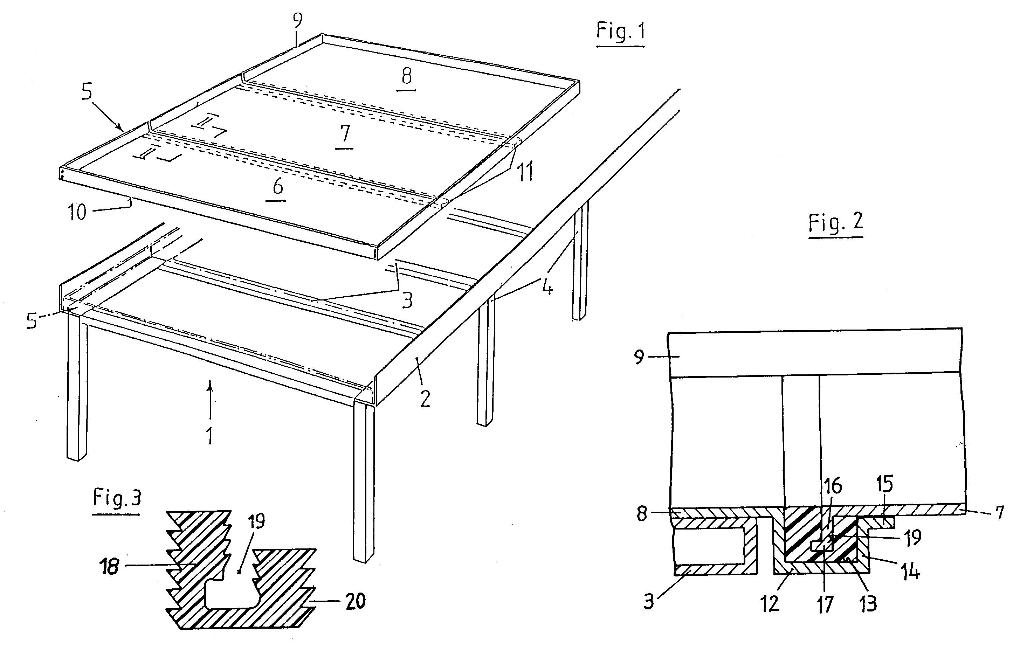

Die Plattenverbindung ergibt sich aus Fig. 2. Die beiden rechteckigen Platten 7 und 8 grenzen mit je einer ihrer beiden Längsseiten aneinander. Der Bereich 12 des der Platte 7 zugewandten Längsrandes der Platte 8 ist zu einer im Querschnitt U-förmigen Rinne 13 mit einem äusseren Schenkel 14 geformt, dessen freier Randbereich von der Rinne 13 weg nach aussen gekröpft ist und eine Abstützung 15 für die angrenzende Platte 7 bildet. Der der Platte 8 zugewandte Randbereich der Platte 7 ist nach unten abgewinkelt und bildet eine Rippe 16. Im Bereich ihrer freien Kante ist die Rippe 16 mit einer gegen die Platte 8 gerichteten Abkröpfung 17 versehen. Der Zwischenraum zwischen der Rinne 13 und der Rippe 16 ist mittels einer Dichtleiste 18 mit einer Nut 19 ausgefüllt. Die Dichtleiste 18 besteht aus einem gummielastischen Material und ist unter Kompression in die Rinne hineingedrückt, so dass sie wasserdicht einerseits an der Rinneninnenwand und anderseits an der Rippe 16 anliegt. Das Verbinden der beiden Platten 7 und 8 erfolgt vorzugsweise, indem zuerst die Dichtleiste mit ihrer Nut 19 auf die Rippe 16 aufgesteckt wird, die mit dieser durch die Abkröpfung 17 eine formschlüssige Verbindung eingeht. Alsdann wird die Dichtleiste durch einen Druck auf die Platte 7 in die Rinne hineingedrückt, bis die Platte 7 gegen die Abstützung 15 anliegt.

Die den vertikalen Rinnenwänden bzw. der Rippe 16 zugewandten Flanken der Dichtleiste 18 sind in Längsrichtung vorzugsweise mit Rillen 20 (Fig. 3) versehen. Besonders geeignet ist eine Rillenform mit Sägezahnprofil, die widerhakenartige Lamellen bilden, derart, dass sie sich beim Aufstecken der Dichtleiste 18 auf die Rippe 16 bzw. beim Eindrücken in die Rinne 13 widerhakenartig zurücklegen und beim Trennen der beiden Platten 7 und 8 nach aussen aufspreizen. Durch das sägezahnartige Profil der Dichtleistenflanken verkleinert sich der Kraftaufwand für die elastische Verformung der Dichtleiste 18, wenn sie auf die Rippe 16 aufgedrückt oder mit dieser in die Rinne 13 hineingedrückt wird.

## Patentansprüche

1. Bauteilsatz zur Herstellung des Bodens einer Pflanzenpalette (5) mit mindestens zwei wasserdicht miteinander zu verbindenden rechteckigen Platten (6, 7, 8), welche mit je einer ihrer beiden Längsseiten aneinander grenzen, wobei die eine der beiden aneinander grenzenden Längsseiten eine im Querschnitt U-förmige nach oben offene Rinne (13) und die andere eine nach unten abgewinkelte Rippe (16) bildet, dadurch gekennzeichnet, dass die Höhe der Rippe kleiner als die Tiefe der Rinne (13) ist, und dass eine Dichtleiste (18) mit einer Längsnut (19) zur Aufnahme der Rippe (16) vorhanden und unter elastischer Kompression in die Rinne (13) eindrückbar ist.

2. Bauteilsatz nach Anspruch 1, dadurch gekennzeichnet, dass die Seitenflanken der Dichtleiste (18) und der Längsnut (19) Lamellen bildende Längsrillen (20) mit Sägezahnprofil aufweisen, derart, dass sicht die Lamellen beim Eindrücken der Rippe (16) in die Längsnut (19) bzw. der Dichtleiste (18) in die Rinne (23) zurücklegen und sich beim Entfernen der Dichtleiste (18) widerhakenartig aufspreizen.

3. Bauteilsatz nach Anspruch 1 oder 2, dadurch gekennzeichnet, dass die Rippe (16) im Bereich ihrer freien Längskante gegen die benachbarte Platte (8) abgekröpft ist.

4. Bauteilsatz nach einem der Ansprüche 1 bis 3, dadurch gekennzeichnet, dass der Bereich der freien Kante der U-profilförmigen Rinne (13) eine von der Rinne wegweisende Abkröpfung (15) zur Stützung der angrenzenden Platte (7) aufweist.

5. Pflanzenpalette (5) mit einem Tragrahmen (9), in den ein mit dem Bauteilsatz nach einem der Ansprüche 1 bis 4 gefertigter Boden mit mindestens zwei Platten (6, 7, 8) eingesetzt ist, wobei die Platten (6, 7, 8) mit je einer ihrer Längsseiten aneinander grenzen, wobei die eine der beiden aneinander grenzenden Längsseiten eine im Querschnitt U-förmige nach oben offene Rinne (13) und die andere eine nach unten abgewinkelte Rippe (16) bildet, dadurch gekennzeichnet, dass die Höhe der Rippe kleiner als die Tiefe der Rinne (13) ist, und dass eine Dichtleiste (18) mit einer Längsnut (19) zur Aufnahme der Rippe (16) vorhanden und unter elastischer Kompression in die Rinne (13) eindrückbar ist.

6. Pflanzenpalette nach Anspruch 5, dadurch gekennzeichnet, dass die an den Rahmen (9) angrenzenden Ränder der Platten (6, 7, 8) am Rahmen (9) hochgezogen sind.

## Claims

1. A set of prefabricated parts for producing the base of a plant pallet (5) comprising at least two rectangular panels (6, 7, 8) which are to be joined to each other in a water-tight manner and which adjoin each other at one of their two longitudinal sides in each case, wherein one of the two mutually adjoining longitudinal sides forms a channel (13) which is U-shaped in cross-section and is open at the top and the other forms a downwardly bent rib (16), characterised in that the height of the rib is less than the depth of the channel (13), and that a sealing strip (18) is present which has a longitudinal slot (19) for receiving the rib (16) and which can be pressed into the channel (13) under elastic compression.

2. A set of prefabricated parts according to claim 1, characterised in that the side flanks of the sealing strip (18) and of the longitudinal slot (19) comprise longitudinal grooves (20) which form lamellae and which have a saw-tooth profile, so that the lamellae are set back when the rib (16) is pressed into the longitudinal slot (19) or when the sealing strip (18) is pressed into the channel (23) and are spread apart in the manner of barbs when the sealing strip (18) is removed.

3. A set of prefabricated parts according to claim 1 or 2, characterised in that in the region of its free longitudinal edge the rib (16) is bent off at right angles towards the adjacent panel (8).

4. A set of prefabricated parts according to any one of claims 1 to 3, characterised in that the region of the free edge of the channel (13) of U-shaped profile has a portion bent off at right angles (15) for supporting the adjoining panel (7).

5. A plant pallet (5) having a supporting frame (9) in which a base is inserted which comprises at least two panels (6, 7, 8) and which is produced with the set of prefabricated parts according to any one of claims 1 to 4, wherein the panels (6, 7, 8) adjoin each other at one of their longitudinal sides in each case, wherein one of the two mutually adjoining longitudinal sides forms a channel (13) which is U-shaped in cross-section and is open at the top and the other forms a downwardly bent rib (16), characterised in that the height of the rib is less than the depth of the channel (13), and that a sealing strip (18) is present which has a longitudinal slot (19) for receiving the rib (16) and which can be pressed into the channel (13) under elastic compression.

6. A plant pallet according to claim 5, characterised in that the edges of the panels (6, 7, 8) which adjoin the frame (9) are oriented upwards on the frame (9).

## Revendications

1. Jeu de composants préfabriqués pour fabriquer le fond d'une palette pour plantes (5) constitué d'au moins deux plaques rectangulaires (6, 7, 8) à relier de manière étanche le long de leurs côtés longitudinaux en contact, dont l'un a la forme d'une rigole (13) à section en U ouverte vers le haut tandis que l'autre côté a la forme d'une nervure (16) coudée vers le bas,
caractérisé en ce que
la hauteur de la nervure (16) est inférieure à la profondeur de la rigole (13) et qu'il est prévu une baguette d'étanchéité (18) qui présente une rainure longitudinale (19) pouvant recevoir la nervure (16) et qui peut être enfoncée avec compression élastique dans la rigole (13).

2. Jeu de composants selon la revendication 1,
caractérisé en ce que
les flancs latéraux de la baguette d'étanchéité (18) et de la rainure longitudinale (19) présentent des rainures longitudinales (20) à profil en dents de scie, formant des lamelles qui, lorsqu'on enfonce la nervure (16) dans la rainure longitudinale (19) et la baguette d'étanchéité (18) dans la rigole (23) se rabattent et par expansion s'opposent à la manière d'un barbelé de retenue à ce que la baguette d'étanchéité soit retirée.

3. Jeu de composants selon la revendication 1 ou 2,
caractérisé en ce que
la nervure (16), dans la zone de son bord longitudinal libre, est coudée à angle droit en direction de la plaque voisine (8).

4. Jeu de composants selon une des revendications 1 à 3,
caractérisé en ce que
la zone du bord libre de la rigole (13) à profil en forme de U comporte une partie rabattue à angle droit (15) et destinée à soutenir la plaque voisine (17).

5. Palette pour plantes (5) comprenant un cadre porteur (9) dans lequel est monté un plancher réalisé à partir du jeu de composants préfabriqués selon une des revendications 1 à 4 et comportant au moins deux plaques (6, 7, 8) se bordant par leurs côtés longitudinaux dont l'un présente une rigole (13) à section en forme de U ouvert vers le haut tandis que l'autre présente une nervure (16) coudée dirigée vers le bas,
caractérisée en ce que
la hauteur de la nervure (16) est inférieure à la profondeur de la rigole (13) et qu'il est prévu une baguette d'étanchéité (18) qui présente une rainure longitudinale (19) pouvant recevoir la nervure (16) et qui peut être enfoncée avec compression élastique dans la rigole (13).

6. Palette pour plantes selon la revendication 5,
caractérisée en ce que
les bords des plaques (6, 7, 8) qui sont au contact du cadre (9) sont relevés vers le haut.
